(19) Europäisches Patentamt
European Patent Office
Office européen des brevets

(11) EP 1 763 998 B1

(12) EUROPEAN PATENT SPECIFICATION

(45) Date of publication and mention of the grant of the patent:
**23.05.2007 Bulletin 2007/21**

(51) Int Cl.:
***A01N 43/653*** *(2006.01)*

(21) Application number: **05020302.5**

(22) Date of filing: **16.09.2005**

(54) **Fungicidal compositions**

Fungizide Zusammensetzungen

Compositions fongicides

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**21.03.2007 Bulletin 2007/12**

(73) Proprietor: **Syngenta Participations AG**
**4058 Basel (CH)**

(72) Inventors:
- **Godwin, Jeremy,**
**c/o Syngenta Crop Protection AG,**
**CH-4332 Stein (CH)**
- **Guicherit, Eric,**
**c/o Syngenta Crop Protection AG,**
**CH-4058 Basel (CH)**
- **Hosking, David, Gustave, Keith**
**c/o Syngenta Crop Protect. AG**
**CH-4058 Basel (CH)**
- **Neumann, Christoph,**
**c/o Syngenta Crop Protection AG**
**CH-4058 Basel (CH)**

(56) References cited:
**WO-A-98/47367**
**GB-A- 2 264 641**
**US-A- 1 400**
**US-B1- 6 319 949**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 763 998 B1

## Description

The present invention relates to novel fungicidal compositions for the treatment of phytopathogenic diseases of useful plants, especially phytopathogenic fungi, and to a method of controlling phytopathogenic diseases on useful plants.

Chlorothalonil (2,4,5,6-tetrachloro-1,3-benzenedicarbonitrile) is a fungicide which is effective against a number of diseases caused by Ascomycetes and Deuteromycetes.

Triazole fungicides, including Cyproconazole (2-(4-chlorophenyl)-3-cyclopropyl-1-(1H-1,2,4-triazol-1-yl)butan-2-ol), are steroid demethylation inhibitors (ergosterol biosynthesis inhibitors) and are used as fungicides which are effective against a number of diseases caused by Ascomycetes, Basidiomycetes and Deuteromycetes.

Certain mixtures of two of said fungicides are known, such as, for example, mixtures of Chlorothalonil and Cyproconazole, which are known from US-H1400; mixtures of Chlorothalonil and Propiconazole and mixtures of Chlorothalonil and Epoxiconazole, which are both known from US-6,319,949; mixtures of Chlorothalonil and Prothioconazole, which are known from AU-727-186; and mixtures of Cyproconazole and Propiconazole and mixtures of Cyproconazole and Epoxiconazole, which are both known from GB-2-264-641.

Crop tolerance and activity against phytopathogenic plant fungi of both fungicides do not always satisfy the needs of agricultural practice in many incidents and aspects.

Out of the above-mentioned needs of agricultural practice for increased crop tolerance and/or increased activity against phytopathogenic plant fungi, there is therefore proposed in accordance with the present invention a novel synergistic composition for control of phytopathogenic diseases on useful plants or on propagation material thereof, that in addition to customary inert formulation adjuvants, comprises as active ingredient a mixture of component (A), component (B) and component (C);
wherein component (A), component (B) and component (C) are present in the composition in amounts procuding a synergistic effect; and wherein
component (A) is Chlorothalonil;
component (B) is Cyproconazole or a salt or metal complex thereof; and
component (C) is a triazole fungicide selected from Fluquinconazole and a compound of formula A-1

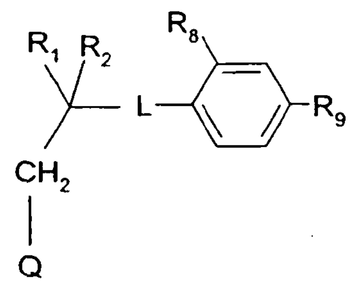

(A-1),

wherein Q is

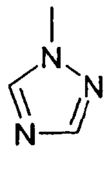

or

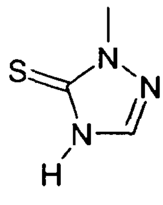

Q1 Q2 ,

L is a chemical bond, $-CH_2-$, $-CH_2-CH_2-$ or $-CHR_3-CH_2-$;
$R_1$ is hydrogen, hydroxy or cyano;
$R_2$ is phenyl, tert.-butyl, $-CH_2-O-CF_2-CHF_2$ or 1-chlorocyclopropyl,
or $R_1$ together with $R_2$ is $-O-CHR_4-CH_2-O-$ or $-O-CHR_5-$;
or $R_3$ together with $R_2$ is $-CH_2-CH_2-CR_6R_7-$;
$R_4$ is methyl or n-propyl;

$R_5$ is 2-chlorphenyl;
$R_6$ is isopropyl or methyl;
$R_7$ is hydrogen or methyl;
$R_8$ is hydrogen or chlor; and
$R_9$ is hydrogen, chlor, fluor or 4-chlorophenoxy;
or a salt or metal complex of component (C).

It has now been found, surprisingly, that the mixture of component (A); component (B) and component (C) not only brings about the additive enhancement of the spectrum of action with respect to the phytopathogen to be controlled that was in principle to be expected but achieves a synergistic effect which extends the range of action of component (A), component (B) and component (C) in two ways. Firstly, the rates of application of component (A), component (B) and component (C) are lowered whilst the action remains equally good. Secondly, the active ingredient mixture still achieves a high degree of phytopathogen control even where the three individual components have become totally ineffective in such a low application rate range. This allows, on the one hand, a substantial broadening of the spectrum of phytopathogens that can be controlled and, on the other hand, increased safety in use.

However, besides the actual synergistic action with respect to fungicidal activity, the pesticidal compositions according to the invention can also have further surprising advantageous properties which can also be described, in a wider sense, as synergistic activity. Examples of such advantageous properties that may be mentioned are: a broadening of the spectrum of fungicidal activity to other phytopathogens, for example to resistant strains; a reduction in the rate of application of the active ingredients; more advantageuos degradability; improved toxicological and/or ecotoxicological behaviour; or improved characteristics of the useful plants including: emergence, crop yields, more developed root system, tillering increase, increase in plant height, bigger leaf blade, less dead basal leaves, stronger tillers, greener leaf colour, less fertilizers needed, less seeds needed, more productive tillers, earlier flowering, early grain maturity, less plant verse (lodging), increased shoot growth, improved plant vigor, and early germination.

A further aspect of the instant invention is a method of controlling phytopathogenic diseases on useful plants or on propagation material thereof, which comprises applying to the useful plants, the locus thereof or propagation material thereof a composition according to the invention.

Prefered is a method of controlling phytopathogenic diseases on useful plants, which comprises applying to the useful plants or to the locus thereof a composition according to the invention.

Within this embodiment, prefered is a method of controlling phytopathogenic diseases on cereal plants, which comprises applying to the cereal plants or to the locus thereof a composition according to the invention.

Prefered is a method of controlling phytopathogenic diseases on useful plants or on propagation material thereof, which comprises applying to the propagation material thereof a composition according to the invention.

Chlorothalonil and Cyproconazole are described in "The Pesticide Manual" [The Pesticide Manual - A World Compendium; Thirteenth Edition; Editor: C. D. S. Tomlin; The British Crop Protection Council]. Chlorothalonil is described therein under entry number (142) and Cyproconazole is described under entry number (207).

In compounds of formula A-1 the term "tert.-butyl" means the group $-C(CH_3)_3$, the term "n-propyl" means the group $-CH_2-CH_2-CH_3$, and the term "isopropyl" means the group $-CH(CH_3)_2$.
In the case that in compounds of formula A-1 L is $-CHR_3-CH_2-$, the carbon atom substituted by $R_3$ is directly adjacent to the carbon atom substituted by $R_1$ and $R_2$.
In the case that in compounds of formula A-1 $R_3$ together with $R_2$ is $-CH_2-CH_2-CR_6R_7-$ the carbon atom substituted by $R_6$ and $R_7$ is directly adjacent to the carbon atom substituted by $R_1$.

The compound of formula A-1, wherein Q is Q1, L is a chemical bond, $R_1$ together with $R_2$ is $-O-CHR_4-CH_2-O-$, $R_4$ is methyl, $R_8$ is chlor, and $R_9$ is 4-chlorophenoxy is known by the name Difenoconazole.
The compound of formula A-1, wherein Q is Q1, L is a chemical bond, $R_1$ together with $R_2$ is $-O-CHR_5-$, $R_5$ is 2-chlorphenyl, $R_8$ is hydrogen, and $R_9$ is fluor is known by the name Epoxiconazole.
The compound of formula A-1, wherein Q is Q1, L is $-CH_2-CH_2-$, $R_1$ is cyano, $R_2$ is phenyl, $R_8$ is hydrogen, and $R_9$ is chlor is known by the name Fenbuconazole.
The compound of formula A-1, wherein Q is Q1, L is $-CHR_3-CH_2-$, $R_1$ is hydroxy, $R_3$ together with $R_2$ is $-CH_2-CH_2-CR_6R_7-$, $R_6$ is isopropyl, $R_7$ is hydrogen, $R_8$ is hydrogen, and $R_9$ is chlor is known by the name Ipconazole.
The compound of formula A-1, wherein Q is Q1, L is $-CHR_3-CH_2-$, $R_1$ is hydroxy, $R_3$ together with $R_2$ is $-CH_2-CH_2-CR_6R_7-$, $R_6$ is or methyl, $R_7$ is or methyl, $R_8$ is hydrogen, and $R_9$ is chlor is known by the name is known by the name Metconazole.
The compound of formula A-1, wherein Q is Q1, L is a chemical bond, $R_1$ together with $R_2$ is $-O-CHR_4-CH_2-O-$, $R_4$ is n-propyl, $R_8$ is chlor, and $R_9$ is chlor is known by the name Propiconazole.
The compound of formula A-1, wherein Q is Q2, L is $-CH_2-$, $R_1$ is hydroxy, $R_2$ is 1-chlorocyclopropyl, $R_8$ is chlor, $R_9$ is hydrogen is known by the name Prothioconazole.
The compound of formula A-1, wherein Q is Q1, L is $-CH_2-CH_2-$, $R_1$ is hydroxy, $R_2$ is tert.-butyl, $R_8$ is hydrogen, $R_9$ is chlor is known by the name Tebuconazole.

The compound of formula A-1, wherein Q is Q1, L is a chemical bond, $R_1$ is hydrogen, $R_2$ is $-CH_2-O-CF_2-CHF_2$, $R_8$ is chlor, and $R_9$ is chlor is known by the name Tetraconazole.

Difenoconazole, Epoxiconazole, Fenbuconazole, Fluquinconazole, Ipconazole, Metconazole, Propiconazole, Prothioconazole, Tebuconazole and Tetraconazole are described in "The Pesticide Manual" [The Pesticide Manual - A World Compendium; Thirteenth Edition; Editor: C. D. S. Tomlin; The British Crop Protection Council]. Difenoconazole is described therein under entry number (247), Epoxiconazole under (298), Fenbuconazole under (329), Fluquinconazole under (385), Ipconazole under (468), Metconazole under (525), Propiconazole under (675), Prothioconazole under (685), Tebuconazole under (761); and Tetraconazole under (778).

Cyproconazole and the triazole fungicide of component (C) can exist in different stereoisomeric forms. The invention covers mixtures comprising all those stereoisomeric forms or mixtures of those stereoisomeric forms in any ratio.

Cyproconazole and the triazole fungicide of component (C) can be used in their free form or as a salt or metal complex thereof.

The mentioned salt of Cyproconazole or the triazole fungicide of component (C) can be prepared by reacting the respective free form of Cyproconazole or the free form of the triazole fungicide of component (C) with an acid.

Of the acids that can be used for the preparation of salts of component (B) and component (C), the following may be mentioned: hydrohalic acids, such as hydrofluoric acid, hydrochloric acid, hydrobromic acid or hydriodic acid; sulfuric acid, phosphoric acid, nitric acid, and organic acids, such as acetic acid, trifluoroacetic acid, trichloroacetic acid, propionic acid, glycolic acid, thiocyanic acid, lactic acid, succinic acid, citric acid, benzoic acid, cinnamic acid, oxalic acid, formic acid, benzenesulfonic acid, p-toluenesulfonic acid, methanesulfonic acid, salicylic acid, p-aminosalicylic acid, 2-phenoxybenzoic acid, 2-acetoxybenzoic acid and 1,2-naphthalene-disulfonic acid.

Metal complexes consist of the underlying organic molecule and an inorganic or organic metal salt, for example a halide, nitrate, sulfate, phosphate, acetate, trifluoroacetate, trichloroacetate, propionate, tartrate, sulfonate, salicylate, benzoate, etc., of an element of main group II, such as calcium and magnesium, and of main groups III and IV, such as aluminium, tin or lead, and of subgroups I to VIII, such as chromium, manganese, iron, cobalt, nickel, copper, zinc, etc.. Preference is given to the subgroup elements of the 4th period. The metals may have any of the different valencies in which they occur. The metal complexes can be mono- or poly-nuclear, i.e. they can contain one or more organic molecule components as ligands.

A preferred embodiment of the present invention is represented by those mixtures which comprise as component (C) a compound of formula A-1 or a salt or metal complex thereof.

A preferred embodiment of the present invention is represented by those mixtures which comprise as component (C) a compound of formula A-1, wherein Q is Q1; or a salt or metal complex thereof.

A preferred embodiment of the present invention is represented by those mixtures which comprise as component (C) a compound of formula A-1, wherein Q is Q2; or a salt or metal complex thereof.

A preferred embodiment of the present invention is represented by those mixtures which comprise as component (C) a compound of formula A-1, wherein Q is

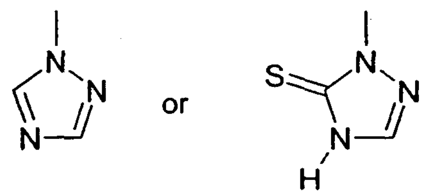

Q1 or Q2 ,

L is a chemical bond, $-CH_2-$, $-CH_2-CH_2-$ or $-CHR_3-CH_2-$;
$R_1$ is hydroxy;
$R_2$ is tert.-butyl or 1-chlorocyclopropyl,
or $R_1$ together with $R_2$ is $-O-CHR_4-CH_2-O-$ or $-O-CHR_5-$;
or $R_3$ together with $R_2$ is $-CH_2-CH_2-CR_6R_7-$;
$R_4$ is n-propyl;
$R_5$ is 2-chlorphenyl;
$R_6$ is methyl;
$R_7$ is methyl;
$R_8$ is hydrogen or chlor;
$R_9$ is hydrogen, chlor or fluor; or a salt or metal complex thereof.

A preferred embodiment of the present invention is represented by those mixtures which comprise as component (C) a triazole fungicide selected from Epoxiconazole, Metconazole, Propiconazole, Prothioconazole and Tebuconazole; or in each case a salt or metal complex thereof.

A preferred embodiment of the present invention is represented by those mixtures which comprise as component (C) a triazole fungicide selected from Epoxiconazole, Propiconazole and Prothioconazole; or in each case a salt or metal complex thereof.

A preferred embodiment of the present invention is represented by those mixtures which comprise as component (C) Epoxiconazole; or a salt or metal complex thereof.

A preferred embodiment of the present invention is represented by those mixtures which comprise as component (C) Metconazole; or a salt or metal complex thereof.

A preferred embodiment of the present invention is represented by those mixtures which comprise as component (C) Propiconazole; or a salt or metal complex thereof.

A preferred embodiment of the present invention is represented by those mixtures which comprise as component (C) Prothioconazole; or a salt or metal complex thereof.

A preferred embodiment of the present invention is represented by those mixtures which comprise as component (C) Tebuconazole; or a salt or metal complex thereof.

A further preferred embodiment of the present invention is represented by those mixtures which comprise as component (C) a compound of formula A-1, wherein Q is

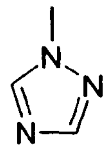

Q1 ,

L is a chemical bond, $-CH_2-CH_2-$ or $-CHR_3-CH_2-$;
$R_1$ is hydrogen, hydroxy or cyano;
$R_2$ is phenyl, $-CH_2-O-CF_2-CHF_2$;
or $R_1$ together with $R_2$ is $-O-CHR_4-CH_2-O-$;
or $R_3$ together with $R_2$ is $-CH_2-CH_2-CR_6R_7-$;
$R_4$ is methyl;
$R_6$ is isopropyl;
$R_7$ is hydrogen;
$R_8$ is hydrogen or chlor;
$R_9$ is chlor or 4-chlorophenoxy; or in each case a salt or metal complex thereof.

A further preferred embodiment of the present invention is represented by those mixtures which comprise as component (C) a triazole fungicide selected from Difenoconazole, Fenbuconazole, Ipconazole and Tetraconazole; or in each case a salt or metal complex thereof.

A further preferred embodiment of the present invention is represented by those mixtures which comprise as component (C) Difenoconazole; or a salt or metal complex thereof.

A further preferred embodiment of the present invention is represented by those mixtures which comprise as component (C) Fenbuconazole; or a salt or metal complex thereof.

A further preferred embodiment of the present invention is represented by those mixtures which comprise as component (C) Ipconazole; or a salt or metal complex thereof.

A further preferred embodiment of the present invention is represented by those mixtures which comprise as component (C) Tetraconazole; or a salt or metal complex thereof.

A further preferred embodiment of the present invention is represented by those mixtures which comprise as component (C) Fluquinconazole; or a salt or metal complex thereof.

In one embodiment of the invention, component (B) is Cyproconazole in the free form.

In one embodiment of the invention, the triazole fungicide of component (C) is used in the free form.

Throughout this document the expression "composition" stands for the various mixtures or combinations of component (A), component (B) and component (C), for example in a single "ready-mix" form, in a combined spray mixture composed from separate formulations of the single active ingredient components, such as a "tank-mix", and in a combined

use of the single active ingredients when applied in a sequential manner, i.e. one after the other with a reasonably short period, such as a few hours or days. The order of applying component (A), component (B) and component (C) is not essential for working the present invention.

The compositions according to the invention may also comprise additional pesticides.

The compositions according to the invention are effective against harmful microorganisms, such as microorganisms, that cause phytopathogenic diseases, in particular against phytopathogenic fungi and bacteria.

The compositions according to the invention are effective especially against phytopathogenic fungi belonging to the following classes: Ascomycetes (e.g. Venturia, Podosphaera, Erysiphe, Monilinia, Mycosphaerella, Uncinula); Basidiomycetes (e.g. the genus Hemileia, Rhizoctonia, Phakopsora, Puccinia, Ustilago, Tilletia); Fungi imperfecti (also known as Deuteromycetes; e.g. Botrytis, Helminthosporium, Rhynchosporium, Fusarium, Septoria, Cercospora, Alternaria, Pyricularia and Pseudocercosporella); Oomycetes (e.g. Phytophthora, Peronospora, Pseudoperonospora, Albugo, Bremia, Pythium, Pseudosclerospora, Plasmopara).

According to the invention "useful plants" typically comprise the following species of plants: grape vines; cereals, such as wheat, barley, rye or oats; beet, such as sugar beet or fodder beet; fruits, such as pomes, stone fruits or soft fruits, for example apples, pears, plums, peaches, almonds, cherries, strawberries, raspberries or blackberries; leguminous plants, such as beans, lentils, peas or soybeans; oil plants, such as rape, mustard, poppy, olives, sunflowers, coconut, castor oil plants, cocoa beans or groundnuts; cucumber plants, such as marrows, cucumbers or melons; fibre plants, such as cotton, flax, hemp or jute; citrus fruit, such as oranges, lemons, grapefruit or mandarins; vegetables, such as spinach, lettuce, asparagus, cabbages, carrots, onions, tomatoes, potatoes, cucurbits or paprika; lauraceae, such as avocados, cinnamon or camphor; maize; tobacco; nuts; coffee; sugar cane; tea; vines; hops; durian; bananas; natural rubber plants; turf or ornamentals, such as flowers, shrubs, broad-leaved trees or evergreens, for example conifers. This list does not represent any limitation.

The term "useful plants" is to be understood as including also useful plants that have been rendered tolerant to herbicides like bromoxynil or classes of herbicides (such as, for example, HPPD inhibitors, ALS inhibitors, for example primisulfuron, prosulfuron and trifloxysulfuron, EPSPS (5-enol-pyrovyl-shikimate-3-phosphate-synthase) inhibitors, GS (glutamine synthetase) inhibitors or PPO (protoporphyrinogen-oxidase) inhibitors) as a result of conventional methods of breeding or genetic engineering. An example of a crop that has been rendered tolerant to imidazolinones, e.g. imazamox, by conventional methods of breeding (mutagenesis) is Clearfield® summer rape (Canola). Examples of crops that have been rendered tolerant to herbicides or classes of herbicides by genetic engineering methods include glyphosate- and glufosinate-resistant maize varieties commercially available under the trade names RoundupReady® , Herculex I® and LibertyLink®.

The term "useful plants" is to be understood as including also useful plants which have been so transformed by the use of recombinant DNA techniques that they are capable of synthesising one or more selectively acting toxins, such as are known, for example, from toxin-producing bacteria, especially those of the genus Bacillus.

Toxins that can be expressed by such transgenic plants include, for example, insecticidal proteins, for example insecticidal proteins from Bacillus cereus or Bacillus popliae; or insecticidal proteins from Bacillus thuringiensis, such as δ-endotoxins, e.g. CryIA(b), CryIA(c), CryIF, CryIF(a2), CryIIA(b), CryIIIA, CryIIIB(b1) or Cry9c, or vegetative insecticidal proteins (VIP), e.g. VIP1, VIP2, VIP3 or VIP3A; or insecticidal proteins of bacteria colonising nematodes, for example Photorhabdus spp. or Xenorhabdus spp., such as Photorhabdus luminescens, Xenorhabdus nematophilus; toxins produced by animals, such as scorpion toxins, arachnid toxins, wasp toxins and other insect-specific neurotoxins; toxins produced by fungi, such as Streptomycetes toxins, plant lectins, such as pea lectins, barley lectins or snowdrop lectins; agglutinins; proteinase inhibitors, such as trypsine inhibitors, serine protease inhibitors, patatin, cystatin, papain inhibitors; ribosome-inactivating proteins (RIP), such as ricin, maize-RIP, abrin, luffin, saporin or bryodin; steroid metabolism enzymes, such as 3-hydroxysteroidoxidase, ecdysteroid-UDP-glycosyl-transferase, cholesterol oxidases, ecdysone inhibitors, HMG-COA-reductase, ion channel blockers, such as blockers of sodium or calcium channels, juvenile hormone esterase, diuretic hormone receptors, stilbene synthase, bibenzyl synthase, chitinases and glucanases.

In the context of the present invention there are to be understood by δ-endotoxins, for example CrylA(b), CrylA (c), CrylF, CrylF(a2), CrylIA(b), CrylIIA, CrylIIB(b1) or Cry9c, or vegetative insecticidal proteins (VIP), for example VIP1, VIP2, VIP3 or VIP3A, expressly also hybrid toxins, truncated toxins and modified toxins. Hybrid toxins are produced recombinantly by a new combination of different domains of those proteins (see, for example, WO 02/15701). An example for a truncated toxin is a truncated CrylA(b), which is expressed in the Bt11 maize from Syngenta Seed SAS, as described below. In the case of modified toxins, one or more amino acids of the naturally occurring toxin are replaced. In such amino acid replacements, preferably non-naturally present protease recognition sequences are inserted into the toxin, such as, for example, in the case of CrylIIA055, a cathepsin-D-recognition sequence is inserted into a CrylIIA toxin (see WO 03/018810)

Examples of such toxins or transgenic plants capable of synthesising such toxins are disclosed, for example, in EP-A-0 374 753, WO 93/07278, WO 95/34656, EP-A-0 427 529, EP-A-451 878 and WO 03/052073.

The processes for the preparation of such transgenic plants are generally known to the person skilled in the

art and are described, for example, in the publications mentioned above. CryI-type deoxyribonucleic acids and their preparation are known, for example, from WO 95/34656, EP-A-0 367 474, EP-A-0 401 979 and WO 90/13651.

The toxin contained in the transgenic plants imparts to the plants tolerance to harmful insects. Such insects can occur in any taxonomic group of insects, but are especially commonly found in the beetles (Coleoptera), two-winged insects (Diptera) and butterflies (Lepidoptera).

Transgenic plants containing one or more genes that code for an insecticidal resistance and express one or more toxins are known and some of them are commercially available. Examples of such plants are: YieldGard® (maize variety that expresses a CryIA(b) toxin); YieldGard Rootworm® (maize variety that expresses a CryIIIB(b1) toxin); YieldGard Plus® (maize variety that expresses a CryIA(b) and a CryIIIB(b1) toxin); Starlink® (maize variety that expresses a Cry9(c) toxin); Herculex I® (maize variety that expresses a CryIF(a2) toxin and the enzyme phosphinothricine N-acetyltransferase (PAT) to achieve tolerance to the herbicide glufosinate ammonium); NuCOTN 33B® (cotton variety that expresses a CryIA(c) toxin); Bollgard I® (cotton variety that expresses a CryIA(c) toxin); Bollgard II® (cotton variety that expresses a CryIA(c) and a CryIIA(b) toxin); VIPCOT® (cotton variety that expresses a VIP toxin); NewLeaf® (potato variety that expresses a CryIIIA toxin); Nature-Gard® and Protecta®.

Further examples of such transgenic crops are:

1. **Bt11 Maize** from Syngenta Seeds SAS, Chemin de l'Hobit 27, F-31 790 St. Sauveur, France, registration number C/FR/96/05/10. Genetically modified *Zea mays* which has been rendered resistant to attack by the European corn borer (*Ostrinia nubilalis* and *Sesamia nonagrioides*) by transgenic expression of a truncated CryIA(b) toxin. Bt11 maize also transgenically expresses the enzyme PAT to achieve tolerance to the herbicide glufosinate ammonium.
2. **Bt176 Maize** from Syngenta Seeds SAS, Chemin de l'Hobit 27, F-31 790 St. Sauveur, France, registration number C/FR/96/05/10. Genetically modified *Zea mays* which has been rendered resistant to attack by the European corn borer (*Ostrinia nubilalis* and *Sesamia nonagrioides*) by transgenic expression of a CryIA(b) toxin. Bt176 maize also transgenically expresses the enzyme PAT to achieve tolerance to the herbicide glufosinate ammonium.
3. **MIR604 Maize** from Syngenta Seeds SAS, Chemin de l'Hobit 27, F-31 790 St. Sauveur, France, registration number C/FR/96/05/10. Maize which has been rendered insect-resistant by transgenic expression of a modified CryIIIA toxin. This toxin is Cry3A055 modified by insertion of a cathepsin-D-protease recognition sequence. The preparation of such transgenic maize plants is described in WO 03/018810.
4. **MON 863 Maize** from Monsanto Europe S.A. 270-272 Avenue de Tervuren, B-1150 Brussels, Belgium, registration number C/DE/02/9. MON 863 expresses a CryIIIB(b1) toxin and has resistance to certain Coleoptera insects.
5. **IPC 531 Cotton** from Monsanto Europe S.A. 270-272 Avenue de Tervuren, B-1150 Brussels, Belgium, registration number C/ES/96/02.
6. **1507 Maize** from Pioneer Overseas Corporation, Avenue Tedesco, 7 B-1160 Brussels, Belgium, registration number C/NL/00/10. Genetically modified maize for the expression of the protein Cry1 F for achieving resistance to certain Lepidoptera insects and of the PAT protein for achieving tolerance to the herbicide glufosinate ammonium.
7. **NK603 × MON 810 Maize** from Monsanto Europe S.A. 270-272 Avenue de Tervuren, B-1150 Brussels, Belgium, registration number C/GB/02/M3/03. Consists of conventionally bred hybrid maize varieties by crossing the genetically modified varieties NK603 and MON 810. NK603 × MON 810 Maize transgenically expresses the protein CP4 EPSPS, obtained from *Agrobacterium sp.* strain CP4, which imparts tolerance to the herbicide Roundup® (contains glyphosate), and also a CryIA(b) toxin obtained from *Bacillus thuringiensis subsp. kurstaki* which brings about tolerance to certain Lepidoptera, include the European corn borer.

Transgenic crops of insect-resistant plants are also described in BATS (Zentrum für Biosicherheit und Nachhaltigkeit, Zentrum BATS, Clarastrasse 13, 4058 Basel, Switzerland) Report 2003, (http://bats.ch).

The term "useful plants" is to be understood as including also useful plants which have been so transformed by the use of recombinant DNA techniques that they are capable of synthesising antipathogenic substances having a selective action, such as, for example, the so-called "pathogenesis-related proteins" (PRPs, see e.g. EP-A-0 392 225). Examples of such antipathogenic substances and transgenic plants capable of synthesising such antipathogenic substances are known, for example, from EP-A-0 392 225, WO 95/33818, and EP-A-0 353 191. The methods of producing such transgenic plants are generally known to the person skilled in the art and are described, for example, in the publications mentioned above.

Antipathogenic substances which can be expressed by such transgenic plants include, for example, ion channel blockers, such as blockers for sodium and calcium channels, for example the viral KP1, KP4 or KP6 toxins; stilbene synthases; bibenzyl synthases; chitinases; glucanases; the so-called "pathogenesis-related proteins" (PRPs; see e.g. EP-A-0 392 225); antipathogenic substances produced by microorganisms, for example peptide antibiotics or heterocyclic antibiotics (see e.g. WO 95/33818) or protein or polypeptide factors involved in plant pathogen defence (so-called "plant disease resistance genes", as described in WO 03/000906).

Useful plants of elevated interest in connection with present invention are cereals; soybean; rice; oil seed rape;

pome fruits; stone fruits; peanuts; coffee; tea; strawberries; turf; vines and vegetables, such as tomatoes, potatoes, cucurbits and lettuce.

The term "locus" of a useful plant as used herein is intended to embrace the place on which the useful plants are growing, where the plant propagation materials of the useful plants are sown or where the plant propagation materials of the useful plants will be placed into the soil. An example for such a locus is a field, on which crop plants are growing.

The term "plant propagation material" is understood to denote generative parts of a plant, such as seeds, which can be used for the multiplication of the latter, and vegetative material, such as cuttings or tubers, for example potatoes. There may be mentioned for example seeds (in the strict sense), roots, fruits, tubers, bulbs, rhizomes and parts of plants. Germinated plants and young plants which are to be transplanted after germination or after emergence from the soil, may also be mentioned. These young plants may be protected before transplantation by a total or partial treatment by immersion.

Preferably "plant propagation material" is understood to denote seeds.

The compositions according to the invention are particularly effective against powdery mildews; rusts; leafspot species; early blights and molds; especially against Septoria, Puccinia, Erysiphe, Pyrenophora, Fusarium and/or Tapesia in cereals; Phakopsora in soybeans; Hemileia in coffee; Phragmidium in roses; Alternaria in potatoes, tomatoes and cucurbits; Sclerotinia in turf, vegetables, sunflower and oil seed rape; black rot, red fire, powdery mildew, grey mold and dead arm disease in vine; Botrytis cinerea in fruits; Monilinia spp. in fruits.

The compositions according to the invention are particularly useful for controlling the following plant diseases:

Alternaria species in fruit and vegetables,
Ascochyta species in pulse crops,
Botrytis cinerea in strawberries, tomatoes, sunflower, pulse crops, vegetables and grapes,
Cercospora arachidicola in peanuts,
Cochliobolus sativus in cereals,
Colletotrichum species in pulse crops,
Erysiphe species in cereals,
Erysiphe cichoracearum and Sphaerotheca fuliginea in cucurbits,
Fusarium species in cereals and maize,
Gäumannomyces graminis in cereals and lawns,
Helminthosporium species in maize, rice and potatoes,
Hemileia vastatrix on coffee,
Microdochium species in wheat and rye,
Phakopsora species in soybean,
Puccinia species in cereals, broad leaf crops and perrenial plants,
Pseudocercosporella species in cereals,
Phragmidium mucronatum in roses,
Podosphaera species in fruits,
Pyrenophora species in barley,
Pyricularia oryzae in rice,
Ramularia collo-cygni in barley,
Rhizoctonia species in cotton, soybean, cereals, maize, potatoes, rice and lawns,
Rhynchosporium secalis in barley and rye,
Sclerotinia species in lawns, lettuce, vegetables and oil seed rape,
Septoria species in cereals, soybean and vegetables,
Sphacelotheca reilliana in maize,
Tilletia species in cereals,
Uncinula necator, Guignardia bidwellii and Phomopsis viticola in vines,
Urocystis occulta in rye,
Ustilago species in cereals and maize,
Venturia species in fruits,
Monilinia species on fruits,
Mycosphaerella fijiensis on banana.

The amount of a composition according to the invention to be applied, will depend on various factors, such as the compounds employed; the subject of the treatment, such as, for example plants, soil or seeds; the type of treatment, such as, for example spraying, dusting or seed dressing; the purpose of the treatment, such as, for example prophylactic or therapeutic; the type of fungi to be controlled or the application time.

It has been found that the use of component (B) and component (C) in combination with component (A)

surprisingly and substantially enhance the effectiveness of the latter against fungi, and vice versa. Additionally, the method of the invention is effective against a wider spectrum of such fungi that can be combated with the active ingredients of this method, when used solely.

The weight ratios of component (A) to component (B), of component (A) to component (C), and of component (B) to component (C) are selected in a way to give a synergistic activity.

In general, the weight ratio of component (A) to component (B), the weight ratio of component (A) to component (C), and the weight ratio of component (B) to component (C) is from 1000 : 1 to 1 : 1000.

A non-limiting example for such weight ratios is Chlorothalonil : Cyproconazole : Propiconazole is 10:1:1. In this example the weight ratio of Chlorothalonil : Cyproconazole (A:B) is 10:1, the weight ratio of Chlorothalonil : Propiconazole (A:C) is 10:1 and the weight ratio of Cyproconazole: Propiconazole (B:C) is 1:1.

Preferably, the weight ratio of component (A) to component (B), the weight ratio of component (A) to component (C), and the weight ratio of component (B) to component (C) is from 100 : 1 to 1 : 100.

More preferably, the weight ratio of component (A) to component (B), the weight ratio of component (A) to component (C), and the weight ratio of component (B) to component (C) is from 20 : 1 to 1 : 20.

Yet more preferably, the weight ratio of component (A) to component (B), the weight ratio of component (A) to component (C), and the weight ratio of component (B) to component (C) is from 10 : 1 to 1 : 10.

The synergistic activity of the compositions according to the invention is apparent from the fact that the fungicidal activity of the composition comprising component (A), component (B) and component (C) is greater than the sum of the fungicidal activities of component (A), component (B) and component (C).

The method of the invention comprises applying to the useful plants, the locus thereof or propagation material thereof in admixture or separately, a composition according to the invention.

The compositions according to the invention have a systemic action and can be used as foliar, soil and seed treatment fungicides.

With the compositions according to the invention it is possible to inhibit or destroy the phytopathogenic microorganisms which occur in plants or in parts of plants (fruit, blossoms, leaves, stems, tubers, roots) in different useful plants, while at the same time the parts of plants which grow later are also protected from attack by phytopathogenic microorganisms.

The compositions according to the invention are of particular interest for controlling a large number of fungi in various useful plants or their seeds, especially in field crops such as potatoes, tobacco and sugarbeets, and wheat, rye, barley, oats, rice, maize, lawns, cotton, soybeans, oil seed rape, pulse crops, sunflower, coffee, sugarcane, fruit and ornamentals in horticulture and viticulture, in vegetables such as cucumbers, beans and cucurbits.

The compositions according to the invention are applied by treating the fungi, the useful plants, the locus thereof or the propagation material thereof with a composition according to the invention.

The compositions according to the invention may be applied before or after infection of the useful plants or the propagation material thereof by the fungi.

When applied to the useful plants component (A) is applied at a rate of 5 to 4000 g a.i./ha, particularly 10 to 2000 g a.i./ha, e.g. 100, 200, 500, 750, 1000 or 1500 g a.i./ha, in association with 1 to 2000 g a.i./ha, particularly 5 to 1000 g a.i./ha, e.g. 50, 75, 100, 150 or 200 g a.i./ha of component (B) and in association with 1 to 2000 g a.i./ha, particularly 5 to 1000 g a.i./ha, e.g. 50, 75, 100, 150 or 200 g a.i./ha of component (C).

In agricultural practice the application rates of the compositions according to the invention depend on the type of effect desired, and typically range from 7 to 8000 g of total composition per hectare, more preferably from 20 to 4000 g ot total composition per hectare.

When the compositions according to the invention are used for treating seed, rates of 0.001 to 50 g of component (A) per kg of seed, preferably from 0.01 to 10g per kg of seed, and 0.001 to 50 g of component (B), per kg of seed, preferably from 0.01 to 10g per kg of seed, and 0.001 to 50 g of component (C), per kg of seed, preferably from 0.01 to 10g per kg of seed, are generally sufficient.

The composition of the invention may be employed in any conventional form, for example in the form of a twin pack, a powder for dry seed treatment (DS), an emulsion for seed treatment (ES), a flowable concentrate for seed treatment (FS), a solution for seed treatment (LS), a water dispersible powder for seed treatment (WS), a capsule suspension for seed treatment (CF), a gel for seed treatment (GF), an emulsion concentrate (EC), a suspension concentrate (SC), a suspo-emulsion (SE), a capsule suspension (CS), a water dispersible granule (WG), an emulsifiable granule (EG), an emulsion, water in oil (EO), an emulsion, oil in water (EW), a micro-emulsion (ME), an oil dispersion (OD), an oil miscible flowable (OF), an oil miscible liquid (OL), a soluble concentrate (SL), an ultra-low volume suspension (SU), an ultra-low volume liquid (UL), a technical concentrate (TK), a dispersible concentrate (DC), a wettable powder (WP) or any technically feasible formulation in combination with agriculturally acceptable adjuvants.

Such compositions may be produced in conventional manner, e.g. by mixing the active ingredients with appropriate inert formulation adjuvants (diluents, solvents, fillers and optionally other formulating ingredients such as surfactants, biocides, anti-freeze, stickers, thickeners and compounds that provide adjuvancy effects). Also conventional

slow release formulations may be employed where long lasting efficacy is intended. Particularly formulations to be applied in spraying forms, such as water dispersible concentrates (e.g. EC, SC, DC, OD, SE, EW, EO and the like), wettable powders and granules, may contain surfactants such as wetting and dispersing agents and other compounds that provide adjuvancy effects, e.g. the condensation product of formaldehyde with naphthalene sulphonate, an alkylarylsulphonate, a lignin sulphonate, a fatty alkyl sulphate, and ethoxylated alkylphenol and an ethoxylated fatty alcohol.

A seed dressing formulation is applied in a manner known per se to the seeds employing the compositions according to the invention and a diluent in suitable seed dressing formulation form, e.g. as an aqueous suspension or in a dry powder form having good adherence to the seeds. Such seed dressing formulations are known in the art. Seed dressing formulations may contain the single active ingredients or the combination of active ingredients in encapsulated form, e.g. as slow release capsules or microcapsules.

In general, the formulations include from 0.01 to 90% by weight of active agent, from 0 to 20% agriculturally acceptable surfactant and 10 to 99.99% solid or liquid formulation inerts and adjuvant(s), the active agent consisting of at least component (A) together with component (B) together with component (C), and optionally other active agents, particularly microbiocides or conservatives or the like. Concentrated forms of compositions generally contain in between about 2 and 80%, preferably between about 5 and 70% by weight of active agent. Application forms of formulation may for example contain from 0.01 to 20% by weight, preferably from 0.01 to 5% by weight of active agent. Whereas commercial products will preferably be formulated as concentrates, the end user will normally employ diluted formulations.

The Examples which follow serve to illustrate the invention, "active ingredient" denoting a mixture of Chlorothalonil (component A), Cyproconazole and a triazole fungicide of component (C) (component C) in a specific mixing ratio.

Formulation Examples

| Wettable powders | a) | b) | c) |
|---|---|---|---|
| active ingredient [A): B) :C) = 1:3:3(a), 1:2:2(b), 1:1:1(c)] | 25 % | 50 % | 75 % |
| Sodium lignosulfonate | 5 % | 5 % | - |
| Sodium lauryl sulfate | 3 % | - | 5 % |
| Sodium diisobutylnaphthalenesulfonate | - | 6 % | 10 % |
| phenol polyethylene glycol ether (7-8 mol of ethylene oxide) | - | 2 % | - |
| highly dispersed silicic acid | 5 % | 10 % | 10 % |
| Kaolin | 62 % | 27 % | - |

The active ingredient is thoroughly mixed with the adjuvants and the mixture is thoroughly ground in a suitable mill, affording wettable powders that can be diluted with water to give suspensions of the desired concentration.

| Powders for dry seed treatment | a) | b) | c) |
|---|---|---|---|
| active ingredient [A) : B) :C) = 1:3:3(a), 1:2:2(b), 1:1:1(c)] | 25 % | 50 % | 75 % |
| light mineral oil | 5 % | 5 % | 5 % |
| highly dispersed silicic acid | 5 % | 5 % | - |
| Kaolin | 65 % | 40 % | - |
| Talcum | - | | 20 |

The active ingredient is thoroughly mixed with the adjuvants and the mixture is thoroughly ground in a suitable mill, affording powders that can be used directly for seed treatment.

Emulsifiable concentrate

| | |
|---|---|
| active ingredient (A): B) :C) = 1:6:6) | 10 % |
| octylphenol polyethylene glycol ether (4-5 mol of ethylene oxide) | 3 % |
| calcium dodecylbenzenesulfonate | 3 % |

(continued)

| | |
|---|---|
| Castor oil polyglycol ether (35 mol of ethylene oxide) | 4 % |
| Cyclohexanone | 30 % |
| Xylene mixture | 50 % |

Emulsions of any required dilution, which can be used in plant protection, can be obtained from this concentrate by dilution with water.

| Dusts | a) | b) | c) |
|---|---|---|---|
| Active ingredient [A) : B) :C) = 1:6:6(a), 1:2:2(b), 1:10:10(c)] | 5 % | 6 % | 4 % |
| Talcum | 95 % | - | - |
| Kaolin | - | 94 % | - |
| Mineral filler | - | - | 96 % |

Ready-for-use dusts are obtained by mixing the active ingredient with the carrier and grinding the mixture in a suitable mill. Such powders can also be used for dry dressings for seed.

Extruder granules

| | |
|---|---|
| Active ingredient (A) : B) :C) = 2:1:1) | 15 % |
| Sodium lignosulfonate | 2 % |
| Carboxymethylcellulose | 1 % |
| Kaolin | 82 % |

The active ingredient is mixed and ground with the adjuvants, and the mixture is moistened with water. The mixture is extruded and then dried in a stream of air.

Coated granules

| | |
|---|---|
| Active ingredient (A) : B) :C) = 1:10:10) | 8 % |
| polyethylene glycol (mol. wt. 200) | 3 % |
| Kaolin | 89 % |

The finely ground active ingredient is uniformly applied, in a mixer, to the kaolin moistened with polyethylene glycol. Non-dusty coated granules are obtained in this manner.

Suspension concentrate

| | |
|---|---|
| active ingredient (A) : B) :C) = 1:8:8) | 40 % |
| propylene glycol | 10 % |
| nonylphenol polyethylene glycol ether (15 mol of ethylene oxide) | 6 % |
| Sodium lignosulfonate | 10 % |
| Carboxymethylcellulose | 1 % |
| Silicone oil (in the form of a 75 % emulsion in water) | 1 % |
| Water | 32 % |

The finely ground active ingredient is intimately mixed with the adjuvants, giving a suspension concentrate

from which suspensions of any desired dilution can be obtained by dilution with water. Using such dilutions, living plants as well as plant propagation material can be treated and protected against infestation by microorganisms, by spraying, pouring or immersion.

Flowable concentrate for seed treatment

| | |
|---|---|
| active ingredient (A) : B) :C) = 1:8:8) | 40 % |
| propylene glycol | 5 % |
| copolymer butanol PO/EO | 2 % |
| tristyrenephenole with 10-20 moles EO | 2 % |
| 1,2-benzisothiazolin-3-one (in the form of a 20% solution in water) | 0.5 % |
| monoazo-pigment calcium salt | 5 % |
| Silicone oil (in the form of a 75 % emulsion in water) | 0.2 % |
| Water | 45.3 % |

The finely ground active ingredient is intimately mixed with the adjuvants, giving a suspension concentrate from which suspensions of any desired dilution can be obtained by dilution with water. Using such dilutions, living plants as well as plant propagation material can be treated and protected against infestation by microorganisms, by spraying, pouring or immersion.

Slow Release Capsule Suspension

28 parts of a combination of cyprodinil and a compound of component B), or of each of these compounds separately, are mixed with 2 parts of an aromatic solvent and 7 parts of toluene diisocyanate/polymethylene-polyphenylisocyanate-mixture (8:1). This mixture is emulsified in a mixture of 1.2 parts of polyvinylalcohol, 0.05 parts of a defoamer and 51.6 parts of water until the desired particle size is achieved. To this emulsion a mixture of 2.8 parts 1,6-diaminohexane in 5.3 parts of water is added. The mixture is agitated until the polymerization reaction is completed.
The obtained capsule suspension is stabilized by adding 0.25 parts of a thickener and 3 parts of a dispersing agent. The capsule suspension formulation contains 28% of the active ingredients. The medium capsule diameter is 8-15 microns.
The resulting formulation is applied to seeds as an aqueous suspension in an apparatus suitable for that purpose.

Biological Examples

A synergistic effect exists whenever the action of an active ingredient combination (for example, the active ingredient combination according to the compositions of the instant invention) is greater than the sum of the actions of the active ingredients applied separately (additive action or action to be expected). The action to be expected (additive action) E for a given active ingredient combination obeys the so-called COLBY formula and can be calculated as follows (COLBY, S.R. "Calculating synergistic and antagonistic responses of herbicide combination". Weeds, Vol. 15, pages 20-22; 1967):

ppm = milligrams of active ingredient (= a.i.) per liter of spray mixture
X = % action by active ingredient A) using p ppm of active ingredient.
Y = % action by active ingredient B) using q ppm of active ingredient.
Z = % action by active ingredient C) using r ppm of active ingredient.

$$E = X+Y+Z - [(XY) + (XZ) + (YZ)] / 100 + [XYZ/10000]$$

Thus, if the observed action is greater than the action to be expected from the Colby formula, then synergism is present.

In comparison with a two-component mixture of active ingredients, such as, for example (A+B), the action to be expected (additive action) E for a given active ingredient combination of three components (A+B+C) can be calculated

as follows (COLBY, S.R. "Calculating synergistic and antagonistic responses of herbicide combination". Weeds, Vol. 15, pages 20-22; 1967):

ppm = milligrams of active ingredient (= a.i.) per liter of spray mixture
$X_{AB}$ =% action by a mixture (A+B), for example, using p ppm of active ingredient.
Z = % action by active ingredient C) using r ppm of active ingredient.

$$E = X_{AB} + [Z\ (100\text{-}X)\ /\ 100]$$

Thus, if the observed action for the given combination of three active ingredients (A+B+C) is greater than the action to be expected from the Colby formula, then synergism is present.

The synergistic effect of the compositions of the instant invention is demonstrated in the following Examples.

If the action actually observed (O) is greater than the expected action (E), then the action of the combination is super-additive, i.e. there is a synergistic effect. In mathematical terms, synergism corresponds to a positive value for the difference of (O-E). In the case of purely complementary addition of activities (expected activity), said difference (O-E) is zero. A negative value of said difference (O-E) signals a loss of activity compared to the expected activity.

Example B-1: Action against Botrytis cinerea on grapes

a) Fungal growth assay

Conidia of the fungus from cryogenic storage were directly mixed into nutrient broth (PDB potato dextrose broth). After placing a (DMSO) solution of the test compounds into a microtiter plate (96-well format) the nutrient broth containing the fungal spores was added. The test plates were incubated at 24°C and the inhibition of growth was determined photometrically after 48-72hrs. The fungicide interactions in the combinations are calculated according to COLBY method.

b) Protective Treatment

5 week old grape seedlings cv. Gutedel are treated with the formulated test compound (0.02% active ingredient) in a spray chamber. Two days after application, the grape plants are inoculated by spraying a spore suspension ($1x10^6$conidia/ml) on the test plants. After an incubation period of 4 days at 21°C and 95% relative humidity in a greenhouse the disease incidence is assessed. The fungicide interactions in the combinations are calculated according to COLBY method.

Example B-2: Action against Septoria tritici on wheat

a) Fungal growth assay

Conidia of the fungus from cryogenic storage were directly mixed into nutrient broth (PDB potato dextrose broth). After placing a (DMSO) solution of the test compounds into a microtiter plate (96-well format) the nutrient broth containing the fungal spores was added. The test plates were incubated at 24°C and the inhibition of growth was determined photometrically after 72 hrs. The fungicide interactions in the combinations are calculated according to COLBY method.

b) Protective Treatment

2 week old wheat plants cv. Riband are treated with the formulated test compound (0.2% active ingredient) in a spray chamber. One day after application, wheat plants are inoculated by spraying a spore suspension ($10x10^5$conidia/ml) on the test plants. After an incubation period of 1 day at 23°C and 95% relative humidity, the plants are kept for 16 days at 23°C and 60% relative humidity in a greenhouse. The disease incidence is assessed 18 days after inoculation. The fungicide interactions in the combinations are calculated according to COLBY method.

Example B-3: Action against Pyricularia oryzae on rice

a) Fungal growth assay

Conidia of the fungus from cryogenic storage were directly mixed into nutrient broth (PDB potato dextrose broth). After placing a (DMSO) solution of the test compounds into a microtiter plate (96-well format) the nutrient broth containing the fungal spores was added. The test plates were incubated at 24°C and the inhibition of growth was determined photometrically after 72 hrs. The fungicide interactions in the combinations are calculated according to COLBY method.

b) Protective Treatment

Rice leaf segments are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-4: Action against Alternaria solani (early blight)

a) Fungal growth assay

Conidia -harvested from a freshly grown colony- of the fungus were directly mixed into nutrient broth (PDB potato dextrose broth). After placing a (DMSO) solution of the test compounds into a microtiter plate (96-well format) the nutrient broth containing the fungal spores was added. The test plates were incubated at 24°C and the inhibition of growth was determined photometrically after 48 hrs. The fungicide interactions in the combinations are calculated according to COLBY method.

b) Protective Treatment

4 week old tomato plants cv. Roter Gnom are treated with the formulated test compound (0.02% active ingredient) in a spray chamber. Two days after application, the tomato plants are inoculated by spraying a spore suspension ($2x10^5$conidia/ml) on the test plants. After an incubation period of 3 days at 20°C and 95% relative humidity in a growth chamber the disease incidence is assessed. The fungicide interactions in the combinations are calculated according to COLBY method.

Example B-5: Action against Pyrenophora teres (Net blotch)

a) Fungal growth assay

Conidia of the fungus from cryogenic storage were directly mixed into nutrient broth (PDB potato dextrose broth). After placing a (DMSO) solution of the test compounds into a microtiter plate (96-well format) the nutrient broth containing the fungal spores was added. The test plates were incubated at 24°C and the inhibition of growth was determined photometrically after 48 hrs. The fungicide interactions in the combinations are calculated according to COLBY method.

b) Protective Treatment

Barley leaf segments are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-6: Action against Venturia inaequalis on apple

a) Fungal growth assay

Conidia of the fungus from cryogenic storage were directly mixed into nutrient broth (PDB potato dextrose broth). After placing a (DMSO) solution of the test compounds into a microtiter plate (96-well format) the nutrient broth

containing the fungal spores was added. The test plates were incubated at 24°C and the inhibition of growth was determined photometrically after 144 hrs. The fungicide interactions in the combinations are calculated according to COLBY method.

b) Protective Treatment

4 week old apple seedlings cv. McIntosh are treated with the formulated test compound (0.02% active ingredient) in a spray chamber. One day after application, the apple plants are inoculated by spraying a spore suspension ($4x10^5$conidia/ml) on the test plants. After an incubation period of 4 days at 21°C and 95% relative humidity the plants are placed for 4 days at 21°C and 60% relative humidity in a greenhouse. After another 4 day incubation period at 21°C and 95% relative humidity the disease incidence is assessed. The fungicide interactions in the combinations are calculated according to COLBY method.

Example B-7: Action against Pythium ultimum (Damping off) - fungal growth assay

Mycelial fragments of the fungus, prepared from a fresh liquid culture, were directly mixed into nutrient broth (PDB potato dextrose broth). After placing a (DMSO) solution of the test compounds into a microtiter plate (96-well format) the nutrient broth containing the fungal spores was added. The test plates were incubated at 24°C and the inhibition of growth was determined photometrically after 48 hrs. The fungicide interactions in the combinations are calculated according to COLBY method.

Example B-8: Action against Leptosphaeria nodorum (glume blotch) - fungal growth assay

Conidia of the fungus from cryogenic storage were directly mixed into nutrient broth (PDB potato dextrose broth). After placing a (DMSO) solution of the test compounds into a microtiter plate (96-well format) the nutrient broth containing the fungal spores was added.

The test plates were incubated at 24°C and the inhibition of growth was determined photometrically after 48 hrs. The fungicide interactions in the combinations are calculated according to COLBY method.

Example B-9: Action against Pseudocercosporella herpotrichoides var. acuformis (eyespot/cereals) - fungal growth assay

Conidia of the fungus from cryogenic storage were directly mixed into nutrient broth (PDB potato dextrose broth). After placing a (DMSO) solution of the test compounds into a microtiter plate (96-well format) the nutrient broth containing the fungal spores was added. The test plates were incubated at 24°C and the inhibition of growth was determined photometrically after 72 hrs. The fungicide interactions in the combinations are calculated according to COLBY method.

Example B-10: Action against Ustilago maydis (corn smut) - fungal growth assay

Conidia of the fungus from cryogenic storage were directly mixed into nutrient broth (PDB potato dextrose broth). After placing a (DMSO) solution of the test compounds into a microtiter plate (96-well format) the nutrient broth containing the fungal spores was added. The test plates were incubated at 24°C and the inhibition of growth was determined photometrically after 48 hrs. The fungicide interactions in the combinations are calculated according to COLBY method.

Example B-11: Action against Phytophthora infestans (late blight) on tomato - protective treatment

Tomato leaf disks are placed on water agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-12: Action against Plasmopara viticola (downy mildew) on grape vines - protective treatment

Grape vine leaf disks are placed on agar in multiwell plates (24-well format) and sprayed with test solutions. After drying, the leaf disks are inoculated with a spore suspension of the fungus. After appropriate incubation the activity of a compound is assessed 7 days after inoculation as preventive fungicidal activity. The fungicide interactions in the

combinations are calculated according to COLBY method.

Example B-13: Action against Botrytis cinerea (Grey mould) on beans - protective treatment

Bean leaf disks are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-14: Action against Erysiphe graminis f.sp. hordei (Barley powdery mildew) on barley - protective treatment

Barley leaf segments are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-15: Action against Erysiphe graminis f.sp. tritici (Wheat powdery mildew) on barley - protective treatment

Barley leaf segments are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

Example B-16: Action against Puccinia recondita (Brown rust) on wheat

a) Protective Treatment of leaf segments

Wheat leaf segments are placed on agar in multiwell plates (24-well format) and sprayed with test solutions. After drying, the leaf disks are inoculated with a spore suspension of the fungus. After appropriate incubation the activity of a compound is assessed 9 days after inoculation as preventive fungicidal activity. The fungicide interactions in the combinations are calculated according to COLBY method.

b) Protective Treatment of plants

1 week old wheat plants cv. Arina are treated with the formulated test compound (0.02% active ingredient) in a spray chamber. One day after application, the wheat plants are inoculated by spraying a spore suspension ($1x10^5$uredospores/ml) on the test plants. After an incubation period of 2 days at 20°C and 95% relative humidity the plants are kept in a greenhouse for 8 days at 20°C and 60% relative humidity. The disease incidence is assessed 10 days after inoculation. The fungicide interactions in the combinations are calculated according to COLBY method.

Example B-17: Action against Septoria nodorum on wheat

a) Protective Treatment of leaf segments

Wheat leaf segments are placed on agar in multiwell plates (24-well format) and sprayed with test solutions. After drying, the leaf disks are inoculated with a spore suspension of the fungus. After appropriate incubation the activity of a compound is assessed 96 hrs after inoculation as preventive fungicidal activity. The fungicide interactions in the combinations are calculated according to COLBY method.

b) Protective Treatment of plants

1 week old wheat plants cv. Arina are treated with the formulated test compound (0.02% active ingredient) in a spray chamber. One day after application, the wheat plants are inoculated by spraying a spore suspension ($5x10^5$conidia/ml) on the test plants. After an incubation period of 1 day at 20°C and 95% relative humidity the plants are kept for 10 days at 20°C and 60% relative humidity in a greenhouse. The disease incidence is assessed 11 days after inoculation. The fungicide interactions in the combinations are calculated according to COLBY method.

Example B-18: Action against Podosphaera leucotricha (Powdery mildew) on apple - protective treatment

5 week old apple seedlings cv. McIntosh are treated with the formulated test compound (0.02% active ingredient) in a spray chamber. One day after, the application apple plants are inoculated by shaking plants infected with apple powdery mildew above the test plants. After an incubation period of 12 days at 22°C and 60% relative humidity under a light regime of 14/10hours (light/dark) the disease incidence is assessed. The fungicide interactions in the combinations are calculated according to COLBY method.

Example B-19: Action against Erysiphe graminis (Powdery mildew) on barley - protective treatment

1 week old barley plants cv. Regina are treated with the formulated test compound (0.02% active ingredient) in a spray chamber. One day after application, the barley plants are inoculated by shaking powdery mildew infected plants above the test plants. After an incubation period of 6 days at 20°C / 18°C (day/night) and 60% relative humidity in a greenhouse the disease incidence is assessed. The fungicide interactions in the combinations are calculated according to COLBY method.

Example B-20: Action against Botrytis cinerea on tomatoes - protective treatment

4 week old tomato plants cv. Roter Gnom are treated with the formulated test compound (0.02% active ingredient) in a spray chamber. Two days after application, the tomato plants are inoculated by spraying a spore suspension ($1x10^5$ conidia/ml) on the test plants. After an incubation period of 4 days at 20°C and 95% relative humidity in a growth chamber the disease incidence is assessed. The fungicide interactions in the combinations are calculated according to COLBY method.

Example B-21: Action against Helminthosporium teres (Net blotch) on barley - protective treatment

1 week old barley plants cv. Regina are treated with the formulated test compound (0.02% active ingredient) in a spray chamber. Two days after application, the barley plants are inoculated by spraying a spore suspension ($3x10^4$conidia/ml) on the test plants. After an incubation period of 4 days at 20°C and 95% relative humditiy in a greenhouse the disease incidence is assessed. The fungicide interactions in the combinations are calculated according to COLBY method.

Example B-22: Action against Uncinula necator (Powdery mildew) on grapes - protective treatment

5 week old grape seedlings cv. Gutedel are treated with the formulated test compound (0.02% active ingredient) in a spray chamber. One day after application, the grape plants are inoculated by shaking plants infected with grape powdery mildew above the test plants. After an incubation period of 7 days at 26°C and 60% relative humidity under a light regime of 14/10hours (light/dark) the disease incidence is assessed. The fungicide interactions in the combinations are calculated according to COLBY method.

The compositions according to the invention exhibit good activity in all of the above examples.

## Claims

1. A composition for control of phytopathogenic diseases on useful plants or on propagation material thereof, that, in addition to customary inert formulation adjuvants, comprises as active ingredient a mixture of component (A), component (B) and component (C);
wherein component (A), component (B) and component (C) are present in the composition in amounts producing a synergistic effect; and wherein
component (A) is Chlorothalonil;
component (B) is Cyproconazole or a salt or metal complex thereof; and
component (C) is a triazole fungicide selected from Fluquinconazole and a compound of formula A-1

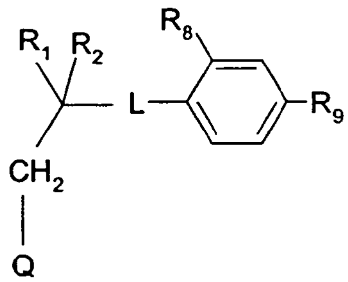

(A-1),

wherein Q is

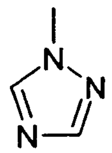

or

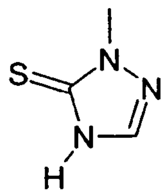

Q1 Q2 ,

L is a chemical bond, $-CH_2-$, $-CH_2-CH_2-$ or $-CHR_3-CH_2-$;
$R_1$ is hydrogen, hydroxy or cyano;
$R_2$ is phenyl, tert.-butyl, $-CH_2-O-CF_2-CHF_2$, 1-cyclopropyl-ethyl or cyclopropylchlormethyl, or $R_1$ together with $R_2$ is $-O-CHR_4-CH_2-O-$ or $-O-CHR_5-$;
$R_4$ is methyl or n-propyl;
$R_5$ is 2-chlorphenyl;
$R_3$ together with $R_2$ is $-CH_2-CH_2-CR_6R_7-$;
$R_6$ is isopropyl or methyl;
$R_7$ is hydrogen or methyl;
$R_8$ is hydrogen or chlor; and
$R_9$ is hydrogen, chlor, fluor or 4-chlorophenoxy;
or a salt or metal complex of component (C).

**2.** A composition according to claim 1, wherein component (C) is a compound of formula A-1

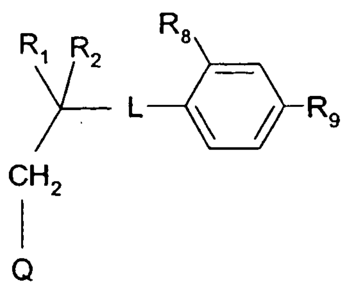

(A-1),

wherein Q is

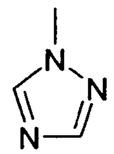 or 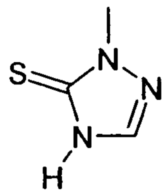

Q1 Q2 ,

L is a chemical bond, $-CH_2-$, $-CH_2-CH_2-$ or $-CHR_3-CH_2-$;
$R_1$ is hydroxy;
$R_2$ is tert.-butyl or 1-chlorocyclopropyl,
or $R_1$ together with $R_2$ is $-O-CHR_4-CH_2-O-$ or $-O-CHR_5-$;
or $R_3$ together with $R_2$ is $-CH_2-CH_2-CR_6R_7-$;
$R_4$ is n-propyl;
$R_5$ is 2-chlorphenyl;
$R_6$ is methyl;
$R_7$ is methyl;
$R_8$ is hydrogen or chlor; and
$R_9$ is hydrogen, chlor or fluor; or a salt or metal complex thereof.

**3.** A composition according to claim 1, wherein component (C) is a triazole fungicide selected from Epoxiconazole, Metconazole, Propiconazole, Prothioconazole and Tebuconazole; or in each case a salt or metal complex thereof.

**4.** A composition according to claim 1, wherein component (C) is a triazole fungicide selected from Epoxiconazole, Propiconazole and Prothioconazole; or in each case a salt or metal complex thereof.

**5.** A composition according to claim 1, wherein component (C) is Epoxiconazole; or a salt or metal complex thereof.

**6.** A composition according to claim 1, wherein component (C) is Propiconazole; or a salt or metal complex thereof.

**7.** A composition according to claim 1, wherein component (C) is Prothioconazole; or a salt or metal complex thereof.

**8.** A composition for control of phytopathogenic diseases on useful plants or on propagation material thereof, that, in addition to customary inert formulation adjuvants, comprises as active ingredient a mixture of component (A) according to claim 1, component (B) according to claim 1, and component (C) according to claim 1; wherein
the weight ratio of component (A) to component (B), the weight ratio of component (A) to component (C) and the weight ratio of component (B) to component (C) is from 1000 : 1 to 1 : 1000.

**9.** A method of controlling phytopathogenic diseases on useful plants or on propagation material thereof, which comprises applying to the useful plants, the locus thereof or propagation material thereof a composition according to claim 1.

**10.** A method of controlling phytopathogenic diseases on useful plants according to claim 9, which comprises applying to the useful plants or to the locus thereof a composition according to claim 1.

**11.** A method according to claim 10, wherein the useful plants are cereal plants.

**Patentansprüche**

**1.** Zusammensetzung zur Kontrolle phytopathogener Erkrankungen von Nutzpflanzen oder bei Vermehrungsgut davon, welches zusätzlich zu üblichen trägen Formulierungensadjuvanzien als wirksamen Inhaltsstoff eine Mischung aus Bestandteil (A), Bestandteil (B) und Bestandteil (C) umfaßt; worin Bestandteil (A), Bestandteil (B) und Bestandteil (C) in der Zusammensetzung in Mengen vorhanden sind, um eine synergistische Wirkung hervorzurufen und worin Bestandteil (A) Chlorthalonil ist,
Bestandteil (B) Cyproconazol oder ein Salz oder Metallkomplex davon ist und

Bestandteil (C) ein Triazolfungizid ist, das aus Fluchinconazol und einem Bestandteil der Formel A-1:

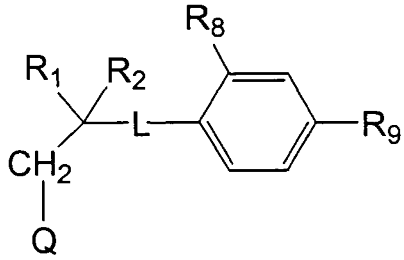

(A-1)

ausgewählt ist, worin Q ist:

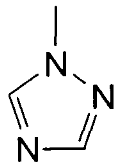

Q1

oder

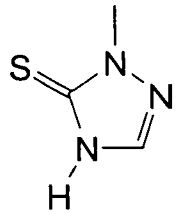

Q2

L ist eine chemische Bindung, $-CH_2-$, $-CH_2-CH_2-$ oder $-CHR_3-CH_2-$;
$R_1$ ist Wasserstoff, Hydroxy oder Cyano;
$R_2$ ist Phenyl, tert-Butyl, $-CH_2-O-CF_2-CHF_2$,
1-Cyclopropylethyl oder Cyclopropylchlormethyl, oder $R_1$ ist zusammen mit $R_2$ $-O-CHR_4-CH_2-O-$ oder $-O-CHR_5-$;
$R_4$ ist Methyl oder n-Propyl;
$R_5$ ist 2-Chlorphenyl;
$R_3$ zusammen mit $R_2$ ist $-CH_2-CH_2-CR_6R_7-$;
$R_6$ ist Isopropyl oder Methyl;
$R_7$ ist Wasserstoff oder Methyl;
$R_8$ ist Wasserstoff oder Chlor; und
$R_9$ ist Wasserstoff, Chlor, Fluor oder 4-Chlorphenoxy;
oder ein Salz oder Metallkomplex des Bestandteils (C).

**2.** Zusammensetzung gemäß Anspruch 1, worin Bestandteil (C) eine Verbindung der Formel A-1 ist:

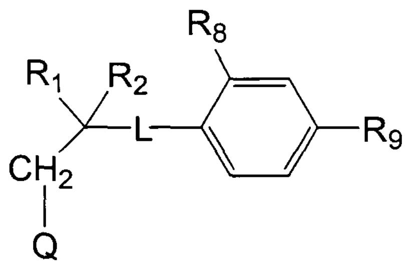

(A-1)

worin Q ist:

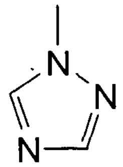 Q1 oder 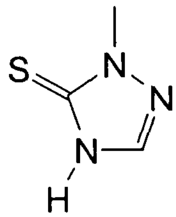 Q2

L ist eine chemische Bindung, $-CH_2-$, $-CH_2-CH_2-$ oder $-CHR_3-CH_2-$;
$R_1$ ist Wasserstoff;
$R_2$ ist tert-Butyl oder 1-Chlorcyclopropyl,
oder $R_1$ ist zusammen mit $R_2$ $-O-CHR_4-CH_2-O-$ oder $-O-CHR_5-$;
oder $R_3$ ist zusammen mit $R_2$ $-CH_2-CH_2-CR_6R_7-$;
$R_4$ ist n-Propyl;
$R_5$ ist 2-Chlorphenyl;
$R_6$ ist Methyl;
$R_7$ ist Methyl;
$R_8$ ist Wasserstoff oder Chlor; und
$R_9$ ist Wasserstoff, Chlor oder Fluor;
oder ein Salz oder Metallkomplex des Bestandteils (C).

**3.** Zusammensetzung gemäß Anspruch 1, worin Bestandteil (C) ein Triazolfungizid ist, ausgewählt aus Epoxiconazol, Metconazol, Propiconazol, Prothioconazol und Tebuconazol oder jeweils ein Salz oder Metallkomplex davon.

**4.** Zusammensetzung gemäß Anspruch 1, worin Bestandteil (C) ein Triazolfungizid ist, ausgewählt aus Epoxiconazol, Propiconazol und Prothioconazol oder jeweils ein Salz oder Metallkomplex davon.

**5.** Zusammensetzung gemäß Anspruch 1, worin Bestandteil (C) Epoxiconazol ist oder ein Salz oder Metallkomplex davon.

**6.** Zusammensetzung gemäß Anspruch 1, worin Bestandteil (C) Propiconazol ist oder ein Salz oder Metallkomplex davon.

**7.** Zusammensetzung gemäß Anspruch 1, worin Bestandteil (C) Prothioconazol ist oder ein Salz oder Metallkomplex davon.

**8.** Zusammensetzung zur Kontrolle phytopathogener Erkrankungen an Nutzpflanzen oder an Vermehrungsgut davon, welche zusätzlich zu üblichen trägen Formulierungsadjuvanzien als wirksamen Inhaltsstoff eine Mischung aus dem Bestandteil (A) gemäß Anspruch 1, Bestandteil (B) gemäß Anspruch 1 und Bestandteil (C) gemäß Anspruch 1 umfaßt, worin das Gewichtsverhältnis des Bestandteils (A) zu Bestandteil (B), das Gewichtsverhältnis des Bestandteils (A) zu Bestandteil (C) und das Gewichtsverhältnis des Bestandteils (B) zu Bestandteil (C) von 1.000:1 bis 1: 1.000 reicht.

**9.** Verfahren zur Kontrolle phytopathogener Erkrankungen an Nutzpflanzen oder an Vermehrungsgut davon, welches das Anwenden einer Zusammensetzung gemäß Anspruch 1 an den Nutzpflanzen, deren Standort oder Vermehrungsgut umfaßt.

**10.** Verfahren zur Kontrolle phytopathogener Erkrankungen an Nutzpflanzen gemäß Anspruch 9, welches das Auftragen einer Zusammensetzung gemäß Anspruch auf die Nutzpflanzen oder den Standort davon umfaßt.

**11.** Verfahren gemäß Anspruch 10, worin die Nutzpflanzen Getreidepflanzen sind.

## Revendications

**1.** Composition destinée à réguler des maladies phytophatogènes chez des plantes utiles ou sur un matériau de propagation de celles-ci, qui, en plus des adjuvants de formulation inertes habituels, comprend en tant qu'ingrédient

actif un mélange d'un composant (A), d'un composant (B) et d'un composant (C) ;
dans laquelle le composant (A), le composant (B) et le composant (C) sont présents dans la composition en des quantités produisant un effet synergique ; et dans laquelle
le composant (A) est le chlorothalonil ;
le composant (B) est le cyproconazole ou un sel ou un complexe métallique de celui-ci ; et
le composant (C) est un agent fongicide de triazole choisi parmi le fluquinconazole et un composé de formule A-1

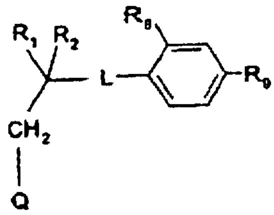

(A-1),

dans laquelle Q est

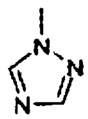

ou

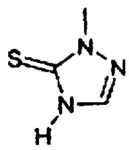

Q1 Q2

L est une liaison chimique, $-CH_2-$, $-CH_2-CH_2-$ ou $-CHR_3-CH_2-$ ;
$R_1$ est un atome d'hydrogène, un groupe hydroxy ou un groupe cyano ;
$R_2$ est un groupe phényle, un groupe tert-butyle, un groupe $-CH_2-O-CF_2-CHF_2$, un groupe 1-cyclopropyl-éthyle ou un groupe cyclopropylchlorométhyle,
ou $R_1$ conjointement avec $R_2$ est un groupe $-O-CHR_4-CH_2-O-$ ou $-O-CHR_5-$ ;
$R_4$ est un groupe méthyle ou un groupe n-propyle ;
$R_5$ est le 2-chlorophényle ;
$R_3$ conjointement avec $R_2$ est $-CH_2-CH_2-CR_6R_7-$ ;
$R_6$ est un groupe isopropyle ou un groupe méthyle ;
$R_7$ est un atome d'hydrogène ou un groupe méthyle ;
$R_8$ est un atome d'hydrogène ou un atome de chlore ; et
$R_9$ est un atome d'hydrogène, un atome de chlore, un atome de fluor ou un groupe 4-chlorophénoxy ;
ou un sel ou un complexe métallique du composant (C).

**2.** Composition selon la revendication 1, dans laquelle le composant (C) est un composé de formule A-1

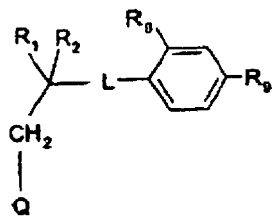

(A-1),

dans laquelle Q est

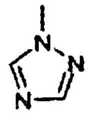 ou 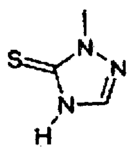

Q1 Q2

L est une liaison chimique, $-CH_2-$, $-CH_2-CH_2-$ ou $-CHR_3-CH_2-$ ;
$R_1$ est un groupe hydroxy ;
$R_2$ est un groupe tert-butyle ou un groupe 1-chlorocyclopropyle,
ou $R_1$ conjointement avec $R_2$ est-$O-CHR_4-CH_2-O-$ ou $-O-CHR_5-$ ;
ou $R_3$ conjointement avec $R_2$ est $-CH_2-CH_2-CR_6R_7-$ ;
$R_4$ est un groupe n-propyle ;
$R_5$ est un groupe 2-chlorophényle ;
$R_6$ est un groupe méthyle ;
$R_7$ est un groupe méthyle ;
$R_8$ est un atome d'hydrogène ou un atome de chlore ; et
$R_9$ est un atome d'hydrogène, un atome de chlore ou un atome de fluor ; ou un sel ou un complexe métallique de celui-ci.

**3.** Composition selon la revendication 1, dans laquelle le composant (C) est un agent fongicide triazole choisi parmi l'époxiconazole, le metconazole, le propiconazole, le prothioconazole et le tébuconazole ; ou dans chaque cas un sel ou un complexe métallique de celui-ci.

**4.** Composition selon la revendication 1, dans laquelle le composant (C) est un fongicide triazole choisi parmi l'époxiconazole, le propiconazole et le prothioconazole ; ou dans chaque cas un sel ou un complexe métallique de celui-ci.

**5.** Composition selon la revendication 1, dans laquelle le composant (C) est l'époxiconazole ; ou un sel ou un complexe métallique de celui-ci.

**6.** Composition selon la revendication 1, dans laquelle le composant (C) est le propiconazole ; ou un sel ou un complexe métallique de celui-ci.

**7.** Composition selon la revendication 1, dans laquelle le composant (C) est le prothioconazole ; ou un sel ou un complexe métallique de celui-ci.

**8.** Composition destinée à réguler des maladies phytopathogènes chez des plantes utiles ou sur un matériau de propagation de celles-ci, qui, en plus des adjuvants de formulation inertes habituels, comprend en tant qu'ingrédient actif un mélange d'un composant (A) selon la revendication 1, d'un composant (B) selon la revendication 1 et d'un composant (C) selon la revendication 1 ; dans laquelle
le rapport en poids du composant (A) sur le composant (B), le rapport en poids du composant (A) sur le composant (C) et le rapport en poids du composant (B) sur le composant (C) est de 1 000 : 1 à 1 : 1 000.

**9.** Procédé destiné à réguler des maladies phytopathogènes chez des plantes utiles ou sur un matériau de propagation de celles-ci, qui comprend l'application aux plantes utiles, au locus de celles-ci ou au matériau de propagation de celles-ci d'une composition selon la revendication 1.

**10.** Procédé destiné à réguler des maladies phytopathogènes chez des plantes utiles selon la revendication 9, qui comprend l'application aux plantes utiles ou au locus de celles-ci d'une composition selon la revendication 1.

**11.** Procédé selon la revendication 10, dans lequel les plantes utiles sont des plantes céréalières.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 400 H1
- US 6319949 B
- AU 727186
- GB 2264641 A
- WO 0215701 A
- WO 03018810 A
- EP 0374753 A
- WO 9307278 A
- WO 9534656 A
- EP 0427529 A
- EP 451878 A
- WO 03052073 A
- EP 0367474 A
- EP 0401979 A
- WO 9013651 A
- EP 0392225 A
- WO 9533818 A
- EP 0353191 A
- WO 03000906 A


### Non-patent literature cited in the description


- The Pesticide Manual. The Pesticide Manual - A World Compendium. The British Crop Protection Council
- **COLBY, S.R.** Calculating synergistic and antagonistic responses of herbicide combination. *Weeds,* 1967, vol. 15, 20-22